# EUROPEAN PATENT APPLICATION

(11) **EP 1 674 301 A2**
(43) Date of publication of application: **28.06.2006**
(21) Application number: 05112345.3
(22) Date of filing: 16.12.2005
(51) Int. Cl.: B60C 23/04

(54) **System for wireless data communication between a vehicle and its tires**

(30) Priority: 23.12.2004 EP 04293110
(71) Applicant: Société de Technologie Michelin, 63000 Clermont-Ferrand (FR); MICHELIN RECHERCHE ET TECHNIQUE S.A., 1763 Granges-Paccot (CH)
(72) Inventor: Myatt, David, 63119 Chateaugay (FR)

(57) **Abstract**

A system for wireless data communication between a vehicle and at least one of its tyres (10), the system comprising a fixed antenna mounted on the vehicle and an antenna integral with the tyre (10), the latter antenna being located in proximity with the tyre's (10) belt. The characteristics of the tyre belt are chosen in order to achieve an increased transmission distance.

## Description

### FIELD OF INVENTION

The present invention concerns systems for wireless data communication between a vehicle and its tyres.

### DEFINITIONS

In the present document :

"cord" is understood to mean a single thread or wire, metallic or non metallic, or an assembly of several threads or wires ;

"ply" refers to a layer of parallel reinforcing cords, metallic or non metallic, woven or unwoven, and embedded in a rubber composition, the thickness of the ply being close to the diameter of an individual cord ;

"belt" refers to an assembly of at least one ply that is unanchored to the bead;

"axial" refers to a direction essentially parallel to the rotation axis of a tyre

"radial" refers to a direction parallel to a vector perpendicular to the axial direction and which intersects the rotation axis of the tyre

### BACKGROUND OF INVENTION

The wireless communication of data between a vehicle and its tyres is a major field of development in the automotive industry ; numerous applications concerning both tyre identification and the transmission of tyre parameters such as tyre pressure, tyre temperature, tyre rotational speed, or forces acting on the tyre, have been developed.

One of the parameters limiting the development of such applications is the attenuation of the electromagnetic signal between the high frequency transmitter circuit and the receiving unit, which leads to a reduction of the transmission distance. A signal transmitted from or to the tyre is attenuated by the cumulative effect of the rubber composition layers and steel belts. As mentioned in the patent application US 2002/0113692, the wheel rim, the steel belts in the tyre and fillers in the rubber composition of the tyre attenuate the signals so heavily that the antennas of the interrogator and of the responder must be arranged in close proximity to each other.

It has been suggested to take advantage the strong absorption of the electromagnetic waves in metallic components of the tyre by using the latter as parts of the data transmission system : EP 0 389 406 describes a tyre comprising a transponder that is capacitively coupled to a belt or breaker ply reinforced with steel cord ; EP 0 875 405 discloses the use of a conductive wire in a jointless belt as the transmitting and receiving antenna of the transponder ; US 6 630 910 teaches that the coupling of a wave antenna to an inner steel belt can be direct, capacitive, or reactive.

Moreover, it has been observed that the electromagnetic field that penetrates into a tyre is influenced by an electrically conductive belt and bent around the belt, thus yielding a distribution of the energy of the radio-wave field along the entire periphery of the belt. Patent application US 2003/0156067 therefore describes the use of the whole steel belt of a tyre as an « intermediate or auxiliary antenna ». Such use of the belt opens interesting areas of application, but the very nature of the steel belts used in tyres does not make them suitable candidates for all types of applications. If another type of antenna is to be used and has to be arranged close to the steel belt, the attenuation of the electromagnetic energy by the belt presents a serious problem and dramatically reduces the transmission distance mentioned above. In certain cases the distance is reduced to less than 50 % of the distance that could be obtained with the same transmission circuit outside the tyre.

### SUMMARY OF THE INVENTION

The present invention aims to increase the transmission distance of a system for data communication between a vehicle and at least one of its tyres, the system comprising a fixed antenna mounted on the vehicle and an antenna integral with the tyre, the latter antenna being located in proximity with the tyre's belt, i.e. in the crown or in the sidewall of the tyre. This goal is achieved by modifications of the structure of the tyre's belt.

According to one preferred embodiment of the invention, the transmission distance is increased through the use of a belt comprising at least one breaker ply that is free of metallic components. Preferentially, at most one breaker ply comprises metallic elements. Even more preferentially, all the breaker plies of the tyre's belt are free of metallic components.

According to another preferred embodiment of the invention, the transmission distance is increased through the use of a belt that comprises only one single breaker ply.

According to a third preferred embodiment of the invention, the transmission distance is increased through the use of a belt being characterised in that
- at least one of the breaker plies is made up of metallic cords that are inclined by an angle α (alpha) with respect to the circumferential direction ;
- the length of the cords does not exceed 75 % of the width of the breaker ply ; and
- the minimum distance between two cords is greater than or equal to twice the diameter of the cords.

According to a fourth preferred embodiment of the invention, the transmission distance is increased through the use of a belt that consists of at least two breaker plies made up of metallic cords, the minimum radial distance between adjacent breaker plies being greater than or equal to twice the diameter of the cords.

According to a fifth preferred embodiment of the invention, the transmission distance is increased through the use of a belt that consists of at least two breaker plies separated by a layer of rubber composition, the resistance between any cord of a breaker ply and any cord of an adjacent breaker ply being greater than 20 kΩ The resistance measurement is to be carried out on a slice obtained from the tyre by cutting the tyre twice along a radial direction such that the slice has a width of 5 cm, the width being measured on the surface of the tread along the circumferential direction (i.e. the direction which is perpendicular both to the axial and radial directions of the tyre).

According to a sixth preferred embodiment of the invention, the transmission distance is increased through the use of a belt that consists of at least two breaker plies separated by a layer of rubber composition, such that the capacity between any cord of a breaker ply and any cord of an adjacent breaker ply is less than 1 nF. The capacity measurement is to be carried out on a slice obtained from a tyre by cutting the tyre twice along a radial direction such that the slice has a width of 5 cm, the width being measured on the surface of the tread along the circumferential direction

According to a seventh preferred embodiment of the invention, the transmission distance is increased through the use of a belt that consists of at least two breaker plies, the metallic cords of the breaker plies being inclined by an angle that is greater than 30 degrees with respect to the circumferential direction.

According to a eighth preferred embodiment of the invention, the transmission distance is increased through the use of a belt being characterised in that the laying pitch of the metallic cords of the breaker plies of the belt is greater than twice the diameter of the cords.

According to an ninth preferred embodiment of the invention, the transmission distance is increased through the use of a belt being characterised in that the diameter of the metallic cords of the belt's breaker plies is greater than 0.8 mm

According to a tenth preferred embodiment of the invention, the transmission distance is increased through the use of a belt being characterised in that the high frequency resistance of the cords of the belt's breaker plies is greater than 50 Ω/m at a frequency of 13.56 MHz. However, it should be noted that the present invention is not limited to a given transmission frequency.

Of course it is possible or even desirable to combine the characteristics of several embodiments in order to obtain a system with increased transmission distance for a chosen frequency of electromagnetic radiation.

### BRIEF DESCRIPTION OF THE DRAWINGS

The invention may be better understood by reference to the detailed description which follows and to the drawings, in which :

figure 1 is a schematic view of a pneumatic radial tyre ;

figure 2 is a schematic representation of the lattice formed by the cords of two breaker plies ;

figure 3 is a schematic representation of a resonant circuit formed by the cords of two adjacent breaker plies ;

figure 4 is a schematic representation of the resonant circuit corresponding to the arrangement of figure 3 ;

figure 5 is a graph illustrating the frequency dependence of the absorption of electromagnetic energy in different breaker plies.

### DESCRIPTION OF THE PREFERRED EMBODIMENTS

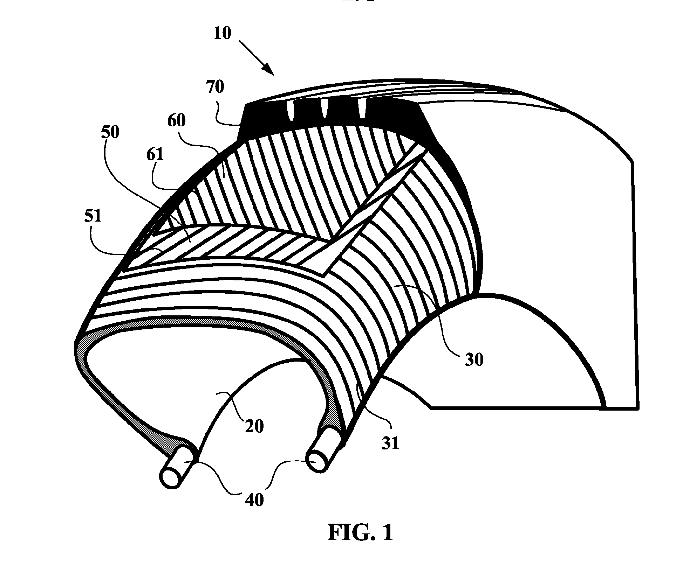

Figure 1 schematically represents the structure of a radial pneumatic tyre 10 comprising an inner liner 20 made of airtight synthetic rubber, a carcass ply 30 composed of textile cords 31, laid down in straight lines and sandwiched in rubber, bead wires 40 holding the tyre 10 onto the rim (not illustrated), a breaker belt made of at least two radially adjacent breaker plies 50 and 60, and a tread 70 laid over the breaker plies 50 and 60 to be in contact with the road. Each of the two breaker plies 50 and 60 of tyre 10 is reinforced with steel cords 51 and 61 that are inclined with respect to the equatorial plane of the tyre at an appropriate angle (typically around 20°), the cords 51 of one ply being inclined oppositely to the cords 61 of the other ply.

This particular arrangement of the plies comprised in the breaker belt explains the strong absorption of electromagnetic radiation in the belt. As schematically represented in figure 2, the sets of cords 51 and 61 of the adjacent plies 50 and 60 form a lattice comprising a great number of elementary 80 and composite 90 parallelograms.

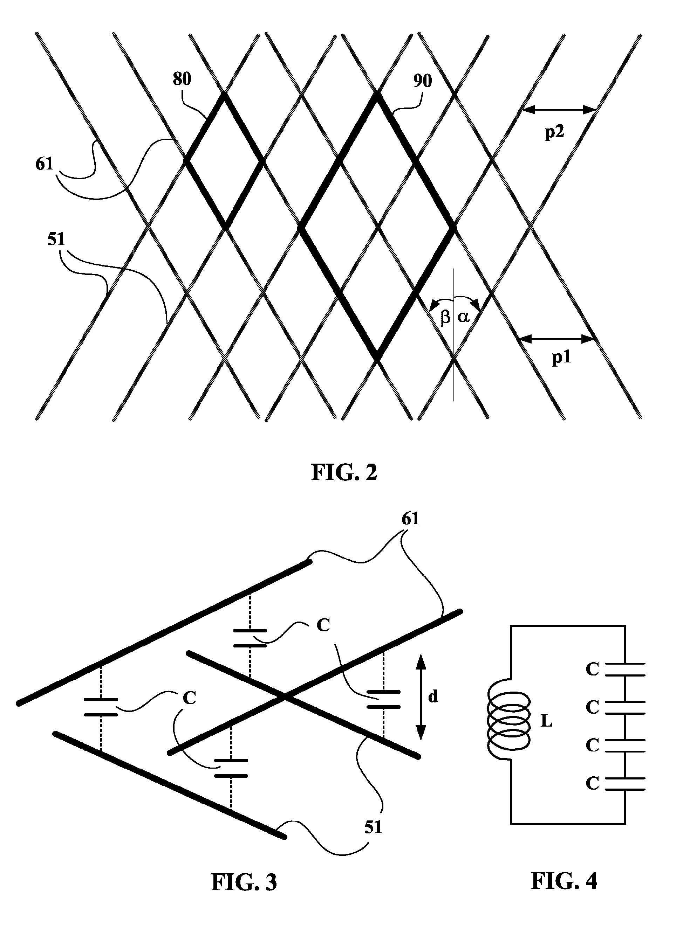

As shown in figure 3, each of these parallelograms constitutes a resonant circuit: the four sides of the parallelogram formed by parts of cords of the belt can be considered as a loop of inductance L, whereas the cord-rubber composition-cord interface at each of the angles of the parallelogram constitutes a capacity C. Figure 4 shows the equivalent LC circuit.

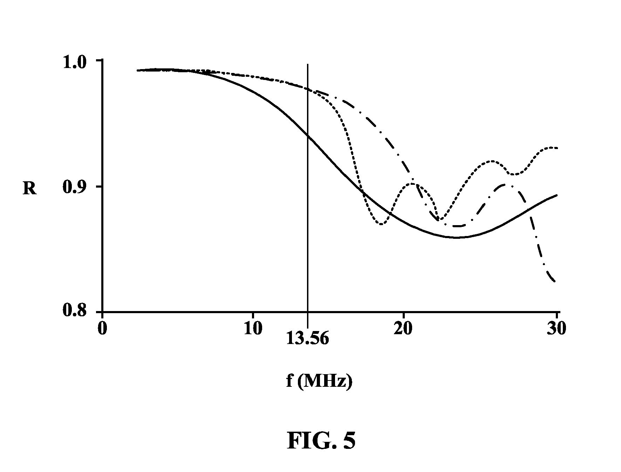

As it is well known, a resonant circuit can be excited by electromagnetic radiation of a frequency that is close to its resonant frequency. The more circuits are excited, the stronger the electromagnetic radiation is absorbed. The great number of circuits of varying shapes (and, therefore, of varying inductance L) present in the belt of a tyre explains the fact that the absorption function is of complex shape. Figure 5 shows measurements of the reflectance of a standard tyre (solid line) as a function of the frequency of the electromagnetic radiation that is reflected. The more the value departs from 1, the more energy is absorbed in the belt. It can be seen that absorption becomes significant at frequencies beyond about 8 MHz. At frequencies that are used for transponders in tyres, much of the energy is absorbed : for instance, at 13.56 MHz, absorption is such that the transmission distance is about half of what it would be were there no breaker plies in the tyre.

The aim of the present invention is to provide a system for data communication between a vehicle and its tyres with an increased transmission distance. This goal is achieved by modifying the tyre so as to shift the frequency from which on absorption becomes notable to values beyond the frequency that is used by the communication means. This is done by modifying the capacity and inductance of the resonant circuits constituted by the belt. The following characteristics of the belt can be modified to this aim :

(1) the nature of the cords 51 and 61 used in the breaker plies 50 and 60 : if non metallic cords are used in all of the breaker plies except one, there are no resonant circuits as explained above and absorption is strongly reduced. Of course, there is even less absorption if all the plies are made of exclusively non metallic cords.

(2) the number of plies : if there is only one reinforced ply, absorption is reduced for the same reason : there is no lattice of resonant circuits formed.

(3) the structure of the plies 50 and 60 : the number of resonant circuits of low resonant frequency can be strongly reduced by replacing each metallic cord 51 or 61 by a number of short cords separated by a minimum distance of rubber composition.

(4) the distance between adjacent breaker plies 50 and 60 : the capacity of the resonant circuits formed by metallic cords 51 and 61 of the belt critically depends on this distance. In figure 5, the dashed-dotted line corresponds to a tyre in which the breaker plies 50 and 60 have been separated by an additional skim of rubber composition. It can be seen that the absorption in the region of 13.56 MHz is strongly reduced in comparison to the reference tyre (solid line).

(5) the resistivity of the rubber composition used in the breaker plies 50 and 60 : this is another way of modifying the capacity of the resonant circuits. The dashed line in figure 5 corresponds to a tyre where the conductivity of the rubber composition used in the breaker plies 50 and 60 has been increased. Again, the absorption in the region around 13.56 MHz is significantly reduced.

(6) the inclination of the cords 51 and 61 of the breaker plies 50 and 60 with respect to the circumference of the tyre : if the angles α and β (figure 2) of metallic cords 51 and 61 are modified, the geometry of the loops of the resonant circuits, and, therefore, their inductance, is modified. Figure 2 suggests identical values for α and β, but this is not necessarily so.

(7) the pitch of the breaker plies : another way of modifying the inductance of the resonant circuits formed by the metallic cords of the breaker belt is to change the pitch of at least one of the beaker plies. In figure 2 pitches p1 and p2 are identical, but this is not necessarily so.

(8) the diameter of metallic cords 51 and 61 and

(9) the high frequency conductivity of the cords 51 and 61 : these two parameters also influence the inductance of the resonant circuits.

Of course it is possible or even desirable to combine modifications of several of these parameters in order to obtain a system with increased transmission distance for a chosen frequency of electromagnetic radiation.

## Claims

1. A system for data communication between a vehicle and at least one of its tyres (10), the tyre (10) comprising a belt consisting of at least two breaker plies (50,60) separated by a layer of rubber composition, the system comprising a fixed antenna mounted on the vehicle and an antenna integral with the tyre (10), the latter antenna being located in proximity with the tyre's (10) belt, said belt being **characterised in that** at least one of its breaker plies (50,60) consists of non metallic cords.

2. A system according to claim 1 **characterised in that** at most one of its breaker plies (50,60) consists of metallic cords.

3. The system of claim 1, **characterised in that** all the breaker plies (50,60) of the tyre's (10) belt consist of non metallic cords.

4. A system for data communication between a vehicle and at least one of its tyres (10), the tyre (10) comprising a belt consisting of at least two breaker plies (50,60) separated by a layer of rubber composition, the system comprising a fixed antenna mounted on the vehicle and an antenna integral with the tyre (10), the latter antenna being located in proximity with the tyre's (10) belt, said belt being **characterised in that** the distance between adjacent breaker plies (50,60) made up of metallic cords (51,61) is greater than or equal to twice the diameter of the cords (51,61).

5. A system for data communication between a vehicle and at least one of its tyres (10), the tyre (10) comprising a belt consisting of at least two breaker plies (50,60) separated by a layer of rubber composition, the system comprising a fixed antenna mounted on the vehicle and an antenna integral with the tyre (10), the latter antenna being located in proximity with the tyre's (10) belt, said belt being **characterised in that** the resistance between any cord of a breaker ply (50) and any cord of an adjacent breaker ply (60) is greater than 20 kΩ.

6. The system of claim 5, **characterised in that** the capacity between any cord of a breaker ply (50) and any cord of an adjacent breaker ply (60) is less than 1 nF.

7. A system for data communication between a vehicle and at least one of its tyres (10), the tyre (10) comprising a belt consisting of at least two breaker plies (50,60) separated by a layer of rubber composition, the system comprising a fixed antenna mounted on the vehicle and an antenna integral with the tyre (10), the latter antenna being located in proximity with the tyre's (10) belt, said belt being **characterised in that** the capacity between any cord of a breaker ply (50) and any cord of an adjacent breaker ply (60) is less than 1 nF

8. A system for data communication between a vehicle and at least one of its tyres (10), the tyre (10) comprising a belt consisting of at least two breaker plies (50,60) separated by a layer of rubber composition, the system comprising a fixed antenna mounted on the vehicle and an antenna integral with the tyre (10), the latter antenna being located in proximity with the tyre's (10) belt, said belt being **characterised in that** the high frequency resistivity of the cords (51,61) of the breaker plies (50,60) is greater than 32 Ω/m at a frequency of 13.56 MHz.
